# EUROPEAN PATENT APPLICATION

(11) **EP 2 415 726 A1**
(43) Date of publication of application: **08.02.2012**
(21) Application number: 09784101.9
(22) Date of filing: 28.01.2009
(51) Int. Cl.: C04B 18/14, C04B 18/04, C04B 22/14

(54) **COMPOSITION FOR REDUCING CR (VI) INTO CEMENT**

(71) Applicant: Aditivos Del Cemento, S.L., 21001 Huelva (ES)
(72) Inventor: PEREZ MOHEDANO, Salvador, 21001 Huelva (ES)
(74) Representative: Monzón de la Flor, Luis Miguel
(86) International application number: PCT/ES2009/070010
(87) International publication number: WO 2010/086469

(57) **Abstract**

A composition for the reduction of Cr (VI) in cement using slags from electric steel mill oxides from a Waeltz kiln, treated by means of a reducing process, together with iron (II) sulphate from titanium dioxide manufacture.

## Description

### OBJECT OF THE INVENTION

The present invention relates to a composition that reduces Cr (VI) to Cr (III) in cement and the procedure for obtaining said composition.

### BACKGROUND OF THE INVENTION

In 1950, two Swiss dermatologists, Jaeger and Pelloni, discovered the causes of a professional disease that was common in the building industry. The chromium content in cement was identified as the cause of the allergic eczema on worker's skin that was known and feared for decades.

Substances containing hexavalent chromium are classified in EC legislation as carcinogenic, mutagenic and irritant substances. The hexavalent chromium present in cement enhances sensitisation and causes serious allergic reactions that are pretty frequent amongst workers who handle cement regularly, either at the factory or in the building sector.

The allergic dermatitis or allergic contact dermatitis it causes is very painful and may incapacitate the workers. Guideline 2003/53/EC of the European Parliament and of the Council demanded the member countries, from January 17, 2005, to prohibit the use and marketing of all cements and preparations containing cement with a soluble chromium (VI) content, once hydrated, exceeding 2 ppm the dry weight of the cement.

Depending on the raw material used, the chromium content in cement ranges between 10 ppm and 100 ppm. When mixed with water, the chromium content in the cement can dissolve as Chromium (VI), which causes the skin irritation mentioned above. The European Regulations currently in force require the chemical reduction of Chromium (VI) (to a maximum of 2 ppm) to Chromium (III), thus drastically reducing its solubility, and therefore its effects on the skin.

Hexavalent chromium can be reduced to trivalent chromium, a substance that is innocuous to the skin, by using reducing components. There are currently two compounds that are commonly used in the market: Tin sulphate and ferrous sulphate.

The patent with publication number EP1923370 describes an additive that reduces the chromium in cement based on antimony (III) compounds.

The patent with publication number US7128782 describes a chromium (VI) reducing agent for cement using ferrous sulphate in its composition.

Tin products have the advantage of their easy handling (low-dosage liquid product), as well as the durability of the redox effect. The main drawback for this reducer is its high cost, and therefore its use is limited to specific moments or cements with low Cr (VI) content.

Regarding ferrous sulphate, it allows a significant reduction of the hexavalent chromium in cement and its effect lasts for at least three months since its incorporation into the cement.

The reduction reaction that takes place when using ferrous sulphate as a chemical reducer is the following:

CrO₄²⁻ + 3 Fe²⁺ + 4 OH- + 4 H₂O → Cr(OH)₃ ↓ + 3 Fe(OH)₃ ↓

Iron(II) sulphate comes mainly form titanium dioxide manufacture using the sulphate process, where it is produced as a by-product. There are two phases during this process in which iron (II) sulphate is obtained.
a) it may be obtained by crystallisation of the sulphate solution, which contains titanium and iron and is obtained by breaking down the minerals with titanium content. Iron (II) sulphate crystallisation occurs by cooling the hot solution and the iron sulphate obtained in this process is an iron sulphate heptahydrate (also called copperas) with a free moisture content between 4 and 7%. Its appearance is similar to that of a wet salt, like snow. This makes correct dosage of the product in cement extremely difficult.
b) In the previous process, only part of the iron is removed from the solution. A subsequent filtration of the remaining solution produces an iron sulphate monohydrate (also called Filter Salt), with a high percentage (between 15-25%) of sulphuric acid.

There are processes in the market to transform these raw materials into fluidised products with greater ease of handling and allowing adequate dosage of the iron sulphate. These processes can be summarised as follows:

Fluidisation of copperas or a mixture of copperas and filter salt, using desiccant agents that trap free moisture, usually producing powder products called "free flowing" products. One of the main desiccant agents, although not the only one, is Sepiolite. The industrial process is usually carried out with a mixer.

Granulating the filter salt, previously neutralizing the free sulphuric acid with basic agents of the magnesite or dolomite type. The process is performed in a fertiliser-type granulation plant, and the product obtained is an easy-handling granulate to be added at the grinding mill of the cement plant.

In both cases, the reducing agent acting upon the Cr (VI) content in the cement would be ferrous sulphate.

In this invention we intend to improve the reducing capacity of these iron salts used in the reduction of Cr (VI) by mixing said component with slag produced in a treatment using a Waeltz kiln.

### DESCRIPTION OF THE INVENTION

The problem solved in this invention is the reduction of Cr (VI) in cement.

The reducing composition of the invention contains:
iron (II) sulphate from titanium dioxide manufacturing processes and
treated slag from electric steel mill oxides produced in Waeltz kilns, which enhance the reducing character of these iron salts.

The slag comes from a treatment process in a Waeltz kiln, which is a rotating kiln for the reducing treatment of the load, from oxides called electric steel mill oxides, i.e. the fumes produced by the secondary fusion of iron scraps in an electric furnace, which are collected in a bag filter once cooled.

These oxides have 25% of Zinc (Zn) and 8% of Lead (Pb) as their main elements and up to 5% of chlorides from other metals, Na, K, etc. and also 100 g/Ton of silver. Since they are toxic and hazardous they must be treated, either by inerting or by other methods, before their deposition.

One of the slag treatment methods consists in carbon reduction in a Waeltz kiln, wherein the oxide load, along with hard coal or coke and smelting flux agents, allows reducing the Zn to metal, which volatilises and rises to the upper chamber in the rotating kiln. Here, in contact with the CO₂ generated, the Zn oxidises to ZnO and the CO₂ reduces to CO, as long as the temperature is below a certain value close to 900°C. Part of the lead also passes into the fume current, as well as part of the chlorides mentioned above, which will be collected in a new bag filter, containing an oxide product with 60% of Zn content and also enriched in lead, etc. This product, once washed out and filtered in order to eliminate the chlorides, is used in the primary Zn industry.

The Waeltz kiln residue, after this reducing process, forms the treated slag to be mixed with iron salts for the subsequent reducing treatment of Chromium VI.

The composition of the invention comprises ferrous sulphate and slag from a Waeltz kiln of electric steel mill oxides, treated with a reducing process.

The origin of the ferrous sulphate is preferably iron salts coming mostly from the titanium dioxide manufacturing process, according to the sulphate process, where they occur as by-products.

The free sulphuric acid present in the iron (II) sulphate obtained by titanium dioxide manufacture can be neutralised in order to improve the results.

Said composition can subsequently be transformed by means of a grinding and screening process in order to obtain a powder product, or by means of a granulation process in order to obtain a granulated product.

The reducing agent thus obtained can be added at any stage of the cement manufacturing process, since the reducing effect occurs when mixing the cement with water for its final use. It can therefore be added either in the mill where the clinker is mixed and ground with the other raw materials, after the mill and before the storage silo and/or after the silos, when packaging the cement.

### PREFERRED EMBODIMENT OF THE INVENTION

In a preferred embodiment of the invention, the reduction of the cement Cr (VI) is performed by the addition of ferrous sulphate filter cake mixtures, such as the waste from the manufacture of TiO₂ with slag from a Waeltz kiln from the treatment of electric steel mill oxides.

In order to find out the Cr (VI) content in the cement, and since it may be found as water-soluble Cr (VI), as non-water-soluble Cr (VI) and as Cr (III) or Cr(0), the following methods are followed:
soluble Cr (VI), by leaching with water
total Cr (VI) total, soluble and insoluble, by leaching with sodium carbonate, and
the remaining chromium by the difference with the existing total determination of Cr, determined by nitrogen leaching.

These analysis have been carried out according to prior studies performed by S. S. Potgieter et al. Cement and Concrete Research 33 (2003) 1589-1593.

The slag used in the example of the present invention is a Waeltz kiln slag from the reducing treatment with coal in a rotating furnace of the oxides generated in the iron scrap smelting process in an electric kiln and collected in a subsequent bag filter. During this process, the Zn is reduced and volatilised and re-oxidised, as long as the temperature is below 900°C. The slag obtained contains the ferric oxides reduced either to magnetite, ferrous iron or iron.

Some samples of clinker (main component of cement), gypsum and slag are ground until they are reduced to a size of 0.062 mm.

First of all, 10 g of different mixtures (cake/slag) (C/S) are prepared, varying the proportion of cake and slag in the mixture as indicated in Table 1.

**Table 1. Proportion of cake and slag in the mixtures (C/S)**

| Mixtures | Cake | Slag |
|---|---|---|
| C/S | (% by weight) | (% by weight) |
| 95/5 | 95 | 5 |
| 85/15 | 85 | 15 |
| 70/30 | 70 | 30 |
| 60/40 | 60 | 40 |
| 50/50 | 50 | 50 |

With the aim of studying the effect of H₂SO₄ in Cr (VI) reduction by the C/S mixtures, part of mixtures C/S, once the mixtures were performed, concentrated sulphuric acid (64%) was added in a proportion of 33%, 50% and 70% with respect to the slag content in the sample. Similarly, one sample of each C/S mixture was left without added acid.

On the other hand, 100 g of the clinker/gypsum mixture were prepared in a proportion of 85/15 by weight. The mixture was stirred manually until obtaining a homogeneous sample.

The study of Cr(VI) reduction was then finally performed on the clinker/gypsum mixture by adding the different cake/slag mixtures prepared as described above.

10 g of the clinker/gypsum mixture were taken for each test and 20 mg of the cake/slag mixtures were added.

The different clinker/gypsum and cake/slag mixtures were left to rest for 7 days, and the total Cr, total Cr (VI) and water-soluble Cr (VI) were then determined.

### Determination of the total Cr content.

0.5 g of mixture were weighed and moistened with 0.1 ml of distilled water and 10 ml of a 6 M solution of nitric acid. The samples were heated until the evaporation of the excess acid and diluted with a 1% solution of nitric acid. They were then filtered using filter paper. The end volume was brought up to 100 ml with distilled water. In the case of samples with a low Cr content, the volumes were brought to 25 ml, weighing in turn 1 g of the initial sample.

### Determination of soluble Cr (VI)

0.2 g of mixture were weighed and 25 ml of distilled water were added. The samples were heated and kept boiling for 10 minutes. They were then allowed to cool and stirred for 2 minutes. Finally, the samples were filtered and brought to a volume of 100 ml with distilled water. In the case of very diluted samples the volumes were brought to 25 ml, weighing in turn 1 g of the initial sample.

### Determination of the total Cr (VI) content

0.2 g of mixture were weighed and treated with 10 ml of a 0.1 M sodium carbonate solution. The samples were heated and kept boiling for 10 minutes. They were then allowed to cool and stirred for 2 minutes. They were then filtered using filter paper. The final volume obtained was brought up to a volume of 100 ml with distilled water. In the case of very diluted samples the volumes were brought to 25 ml, weighing in turn 1 g of the initial sample.

The Cr content in each of the solutions obtained as described above was determined by atomic absorption spectrophotometry using a Perkin Elmer 403 atomic absorption spectrophotometer, using a Cr absorption lamp and with a detection limit of 0.003 µg/mL.

The results obtained were the following:

**Table 2. Determination of soluble Cr (VI) in the samples without added H₂SO₄**

| Sample | Soluble Cr (VI) (mg/kg) |
|---|---|
| CK/G | 4.55 |
| CK/G+ C/S 95/5 | 3.79 |
| CK/G+ C/S 95/5 | |
| CK/G+ C/S 95/5 | |
| CK/G+ C/S 70/30 | 1.98 |
| CK/G+ C/S 70/30 | |
| CK/G+ C/S 70/30 | |
| CK/G+ C/S 50/50 | NEGLIGIBLE |
| CK/G+ C/S 50/50 | |
| CK/G+ C/S 50/50 | |

As the table shows, the soluble Cr (VI) content decreases considerable by the addition of C/S mixtures. This decrease is greater the greater the proportion of slag in the mixture, reaching negligible values with the addition of the C/S 50/50 mixture.

**Table 3. Determination of total Cr (VI) in the samples without added H₂SO₄**

| Sample | Soluble Cr (VI) (mg/kg) |
|---|---|
| CK/G | 8.06 |
| CK/G+ C/S 95/5 | 5.26 |
| CK/G+ C/S 95/5 | |
| CK/G+ C/S 95/5 | |
| CK/G+ C/S 70/30 | 4.60 |
| CK/G+ C/S 70/30 | |
| CK/G+ C/S 70/30 | |
| CK/G+ C/S 50/50 | 3.28 |
| CK/G+ C/S 50/50 | |
| CK/G+ C/S 50/50 | |

Table 3 shows the Cr (VI) content for the CK/G mixture and the corresponding CK/G+C/S mixtures without any added sulphuric acid. It is observed that the total Cr (VI) content, as in the soluble Cr (VI) content, decreases considerably with the addition of C/S mixtures. This decrease is greater the greater the slag content, decreasing up to 59% with the addition of the C/S 50/50 mixture.

Table 4. Concentration of total Cr in samples with an addition of 50% of H 2 SO 4 with respect to slag content

| Sample | Total Cr (mg/kg) |
|---|---|
| CK/G | 8.06 |
| CK/G + C/S 95/5 50% acid | 4.37 |
| CK/G + C/S 70/30 50% acid | 7.73 |
| CK/G + C/S 50/50 50% acid | 7.13 |

Table 4 shows how the Cr content increases due to the presence of H₂SO₄.

As you can see, the addition of sulphuric acid decreases Cr (VI) reduction, providing very high values of Cr (VI).

Variations in materials, shapes, size and the arrangement of the component elements, described in a non-limiting manner, do not alter the essence of this invention, this being sufficient for its reproduction by an expert.

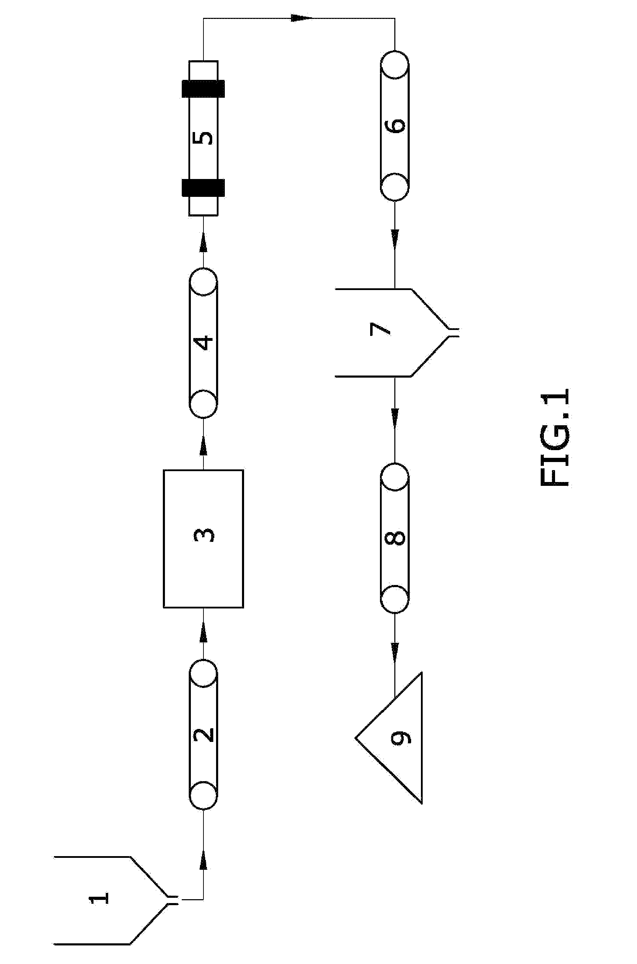

## Claims

1. A composition for the reduction of Cr (VI) in cement **characterised in that** it uses slags from electric steel mill oxides from a Waeltz kiln, treated by means of a reducing process, together with iron (II) sulphate from titanium dioxide manufacture.

2. A composition according to claim 1, **characterised in that** the free sulphuric acid in the iron (II) sulphate obtained from titanium dioxide manufacture is neutralised.

3. A composition for the reduction of Cr (VI) according to claim 1, **characterised in that** the proportion of slag is of at least 30%.
